# EUROPÄISCHE PATENTSCHRIFT

(11) **EP 2 429 852 B1**
(45) Veröffentlichungstag und Bekanntmachung des Hinweises auf die Patenterteilung: **24.08.2016**
(21) Anmeldenummer: 10717149.8
(22) Anmeldetag: 05.05.2010
(51) Int. Cl.: B60K 26/02, B60K 31/00, F02D 11/02, G05G 5/03, B60W 30/14, G05G 1/30

(54) **VERFAHREN UND VORRICHTUNG ZUR GESCHWINDIGKEITSREGELUNG**
SPEED REGULATION METHOD AND DEVICE
PROCÉDÉ ET DISPOSITIF DE RÉGULATION DE VITESSE

(30) Priorität: 15.05.2009 DE 102009021587
(43) Veröffentlichungstag der Anmeldung: 21.03.2012
(73) Patentinhaber: Conti Temic Microelectronic GmbH, 90411 Nürnberg (DE)
(72) Erfinder: LEONE, Carmelo, 85354 Freising (DE); DREWS, Frank, 90552 Röthenbach (DE); BÄUMLER, Jürgen, 90762 Fürth (DE); BRANDT, Thomas, 92265 Edelsfeld (DE)
(74) Vertreter: Büchner, Jörg
(86) Internationale Anmeldenummer: PCT/EP2010/056067
(87) Internationale Veröffentlichungsnummer: WO 2010/130606

(56) Entgegenhaltungen:
- EP-A1- 1 375 232
- EP-A1- 1 375 233
- DE-A1- 10 212 674
- DE-A1- 10 238 484
- DE-A1- 10 250 456
- US-A- 4 380 799
- US-A1- 2005 016 318

## Beschreibung

Die Erfindung betrifft ein Verfahren zur Regelung der Geschwindigkeit eines Kraftfahrzeugs nach dem Oberbegriff von Anspruch 1 sowie eine Vorrichtung zur Durchführung des Verfahrens nach dem Oberbegriff von Anspruch 8.

In der Automobilindustrie geht der Trend immer mehr dazu über, den Fahrzeuglenker hinsichtlich Fahrsicherheit, Fahrkomfort und Fahreffizienz zu unterstützen. Beispiele dafür sind Systeme mit Temporegelung oder Spurhaltesysteme. Dabei wird das Fahrverhalten auf Grund gemessener Fahrzeug- und Umgebungsparameter unterstützend beeinflusst.

Insbesondere fungieren Pedalsysteme mit integrierter Kraftrückstellungseinrichtung, sogenannte Force-Feedback-Systeme, bei der Geschwindigkeitsbeeinflussung gleichzeitig als Temporegler, Geschwindigkeitsbegrenzer oder über die Geschwindigkeitsregelung als System zur Einhaltung eines Mindestabstandes zum vorausfahrenden Fahrzeug. Sobald jedoch der Fahrzeuglenker zum Beispiel durch Bremsen, Kuppeln oder durch abruptes Beschleunigen in die Regelung eingreift, wird das System abgeschaltet.

Im Normalfall wird vom Fuß des Fahrzeugführers zum Zweck der Geschwindigkeitserhöhung eine Kraft gegen eine Rückholfeder auf das Gaspedal ausgeübt. Im Force-Feedback-System wirkt dieser Kraft eine zusätzliche, zum Bespiel von einem elektro-mechanischen Steller erzeugte Rückstellkraft entgegen. Die Höhe der Rückstellkraft kann dabei von der Höhe der Abweichung von einem Geschwindigkeitssollwert abhängen.

Eine derartiges Verfahren sowie eine derartige Vorrichtung sind aus der DE 196 20 929 A1 bekannt. Dabei wird bei einer Überschreitung eines Vorgabewertes von einem Einstellelement eine der Abweichung vom Vorgabewert proportionale Rückstellkraft an dem Gaspedal als Leistungssteuerorgan erzeugt. Gleichzeitig behält der Fahrer zu jedem Zeitpunkt die volle Kontrolle über das Führen des Fahrzeugs, da er zu keinem Zeitpunkt die Kontrolle über das Leistungssteuerorgan abgibt. Dies dient ausschließlich der Fahrsicherheit, trägt aber nicht zum Fahrkomfort bei.

Aus der DE 102 50 456 A1 ist ein Verfahren bekannt, bei dem aktiv eine Kraft zusätzlich zu der passiven Grundkennlinie aufgebracht werden kann. Zusätzlich zur sogenannten passiven Pedalkennlinie werden haptische Informationen über eine variable Force Feedback Stufe übermittelt. Bei der vorbekannten Vorrichtung sind Übertretmittel vorgesehen, sodass die erzeugte Stellkraft in Rückstellrichtung durch eine hinreichend große Betätigungskraft übertretbar ist. Dies dient ebenfalls ausschließlich der Fahrsicherheit. Eine Erhöhung des Fahrkomforts ist dagegen nicht vorgesehen.

Es ist daher eine Aufgabe der vorliegenden Erfindung, ein Verfahren zur Regelung der Geschwindigkeit eines Kraftfahrzeugs zu schaffen, das nicht nur die Fahrsicherheit, sondern auch gleichzeitig den Fahrkomfort sowie die Fahreffizienz verbessert.

Diese Aufgabe wird erfindungsgemäß gelöst durch ein Verfahren mit den Merkmalen des Anspruchs 1. Vorteilhafte Weiterbildungen sind Gegenstand der auf den Anspruch 1 unmittelbar oder mittelbar rückbezogenen Ansprüche.

Bei dem erfindungsgemäßen Verfahren zur Regulierung der Geschwindigkeit eines Kraftfahrzeugs wirkt an einem Pedalhebel gegen den Fuß eines Fahrzeugführers eine Gegenkraft. Diese Kraft wird durch eine Kraftrückstellungseinrichtung erzeugt. Die Kraftrückstellungseinrichtung umfasst im wesentlichen einen Pedalhebel, der um einen Drehpunkt von einer Nulllage bis zu einer Endlage schwenkbar ist, eine Pedalrückholfeder, die den Pedalhebel in seine Nulllage bringen kann. Weiterhin umfasst die Kraftrückstellungseinrichtung einen Elektromotor, der um einen Drehpunkt von einer Nulllage bis zu einer Endlage schwenkbar ist, und der im bestromten Zustand eine Rückstellkraft auf den Pedalhebel in Richtung von dessen Nulllage ausüben kann, und eine Motorrückholfeder zur Rückstellung des stromlosen Elektromotors in dessen Nulllage.

Der funktionale Zusammenhang zwischen einer Kraft, die auf den Pedalhebel wirkt, und dem Winkel des Pedalhebels zwischen der Nulllage und der Endlage wird durch eine Pedalkennlinie beschrieben. Eine Pedalrückholfeder , ein Hystereseelement insbesondere am Pedalhebel und eine Motorrückholfeder erzeugen insbesondere bei einem stromlosen Elektromotor eine sogenannte passive Pedalkennlinie. In einer Pedalkennlinie liegt die hinlaufende Kennlinie, die dem Verlauf der Gegenkraft mit zunehmendem Pedalwinkel in Richtung Endlage des Pedalhebels entspricht, oberhalb der rücklaufenden Kennlinie, so dass sich ein Hystereseeffekt ergibt. Die Hysterese wird durch ein Hystereseelement erzeugt.

Insbesondere ist die passive Kennlinie durch Bestromung des Elektromotors veränderbar. Und zwar kann der Elektromotor in beide Richtungen bestromt werden, so dass die durch Federn erzeugte passive Kraft sowohl erhöht, als auch abgesenkt werden kann, Der Elektromotor kann auf den Pedalhebel eine Rückstellkraft nur in Richtung der Nulllage des Pedalhebels ausüben. Wird der Elektromotor in die andere Richtung bestromt, so ist konstruktiv sichergestellt, dass der Pedalhebel nicht in Richtung Vollgas ausgelenkt werden kann

Die Pedalkennlinie ist zwischen der Nulllage und der Endlage des Pedalhebels durch Entkoppeln der Motorrückholfeder in Richtung der Endlage des Elektromotors durch eine entsprechende Bestromung des Elektromotors auf eine minimale Pedalkennlinie unterhalb der passiven Kennlinie absenkbar. Dabei wird dann die minimale Pedalkennlinie lediglich durch die Pedalrückholfeder und das Hystereseelement erzeugt; weder die Motorrückholfeder noch der Elektromotor selbst üben in diesem Fall eine Kraft auf den Pedalhebel aus.

Insbesondere kann zwischen der Nulllage und der Endlage des Pedalhebels jeder Punkt zwischen der passiven Pedalkennlinie und der minimalen Pedalkennlinie durch eine entsprechende Bestromung des Elektromotors im Bereich zwischen dem stromlosen Zustand und einer Bestromung, bei der sich der Elektromotor in seiner Endlage befindet, realisiert werden kann. Es ist zum Beispiel vorstellbar, dass der Strom des Elektromotors so auf einen festen Wert eingestellt wird, dass die Gegenkraft, die durch die Motorrückholfeder im stromlosen Zustand auf den Pedalhebel wirkt, durch einen festen Betrag abgesenkt wird. Die neue sich so ergebende Kennlinie liegt dann unter der passiven Kennlinie, unter Beibehaltung der Steigung. Der Elektromotor kann aber auch so bestromt werden, das die Steigung der sich ergebenden Kennlinie beliebig variiert.

Die passive Pedalkennlinie kann andererseits insbesondere auch bis zu einer maximalen Pedalkennlinie erhöht werden. Die maximale Pedalkennlinie ist durch das maximal erreichbare Moment des Elektromotors festgelegt. Dabei wirkt dann durch eine entsprechende Bestromung des Elektromotors in Richtung seiner Nulllage und damit in die Richtung der Nulllage des Pedalhebels eine entsprechende maximale Rückstellkraft auf den Pedalhebel.

Wie im Falle der Absenkung der passiven Kennlinie bis zur minimalen Kennlinie kann hier vorteilhafter weise auch jeder Punkt zwischen der passiven Kennlinie und der maximalen Pedalkennlinie durch eine entsprechende Bestromung des Elektromotors im Bereich zwischen dem stromlosen Zustand und dem maximal möglichen Strom realisiert werden. Auch hier kann zwischen der Nulllage und der Endlage des Pedalhebels die Steigung der sich neu ergebenden Kennlinie der Steigung der passiven Kennlinie entsprechen oder auch beliebig variieren.

Im Falle einer Abweichung vom normalen Betriebszustand des Kraftfahrzeugs kann bei einer Solllage zwischen der Nulllage und der Endlage des Pedalhebels eine durch eine Steuereinheit vorgegebene abrupte Erhöhung der Rückstellkraft ein Kraftsprung auf den Pedalhebel in Richtung seiner Nulllage ausgeübt werden, um den Fahrzeugführer auf diese Abweichung aufmerksam zu machen. Die Dauer des Kraftsprungs kann beliebig kurz sein, kann aber auch so lange andauern, bis der normale Betriebszustand des Kraftfahrzeugs wiederhergestellt ist. Insbesondere kann vor der oben erwähnten Solllage eine zeitlich begrenzte Absenkung der Pedalkennlinie stattfinden, die jedoch oberhalb der minimalen Pedalkennlinie bleibt. Dadurch wird der haptische Eindruck des Kraftsprungs auf den Fuß des Fahrzeuglenkers noch erhöht.

Ferner kann bei einer Solllage des Pedalhebels insbesondere in der Nähe der Endlage des Pedalhebels die durch die Steuereinheit vorgegebene Rückstellkraft auf den Pedalhebel durch eine entsprechende Bestromung des Elektromotors derart gesteuert werden, dass eine Kickdown Funktionalität realisiert wird. Dabei wird beim vollständigen Durchtreten des Gaspedals durch einen Kraftsprung nahe der Endlage des Pedalhebels beim Fahrzeuglenker der Eindruck einer Vollgasfahrt erweckt.

Eine weitere Aufgabe der vorliegenden Erfindung ist es, eine Vorrichtung zur Durchführung des Verfahrens nach Anspruch 1 zu schaffen.

Diese Aufgabe wird erfindungsgemäß gelöst durch eine Vorrichtung mit den Merkmalen des Anspruchs 8.

Die erfindungsgemäße Vorrichtung zur Regulierung der Geschwindigkeit eines Kraftfahrzeugs beschreibt ein kompaktes Pedalsystem für den Einsatz in einem Kraftfahrzeug mit einem Gehäuse und mit einer im Gehäuse integrierten Kraftrückstellungseinrichtung. Die Rückstellkraft auf den Pedalhebel in Richtung dessen Nulllage, wird insbesondere durch Bestromen eines Elektromotors erzeugt. Der Elektromotor umfasst einen Stator und einen auf einer Welle angeordneten Rotor. Zusätzlich ist auf der Welle des Elektromotors eine Antriebsscheibe angeordnet, die mittels einer an der Antriebsscheibe exzentrisch angeordneten Antriebsrolle die Rückstellkraft auf den Pedalhebel ausüben kann. Insbesondere ist der Stator auf der Welle des Elektromotors zwischen dem Rotor und der Antriebsscheibe angeordnet. Dies hat den Vorteil, dass die Auswirkung des Biegemoments auf den Rotor, das bei Ausübung der Rückstellkraft auf den Pedalhebel durch die Antriebsscheibe auf die Welle einwirkt, gering ist, da der Rotor auf der der Antriebsscheibe gegenüberliegenden Seite des Stators angeordnet ist. Dadurch wird in der Regel der Luftspalt zwischen Stator und Rotor nicht verändert und die Ansteuerbarkeit des Elektromotors wird nicht beeinträchtigt
Nachfolgend wird die Erfindung in Verbindung mit den Zeichnungen näher beschrieben. Dabei zeigen:
- Fig. 1: eine passive und eine minimale Pedalkennlinie;
- Fig. 2: eine Pedalkennlinie zwischen der passiven und minimalen Pedalkennlinie mit konstanter Steigung;
- Fig. 3: eine Pedalkennlinie zwischen der passive und minimalen Pedalkennlinie mit variabler Steigung;
- Fig. 4: Pedalkennlinien oberhalb der passiven Kennlinie, mit konstanter und mit variabler Steigung;
- Fig. 5: eine frei gestaltete Pedalkennlinie oberhalb und unterhalb der passiven Pedalkennlinie mit abschnittsweise konstanten Steigungen;
- Fig. 6: eine Pedalkennlinie mit einer Kraftabsenkung vor einem Kraftsprung;
- Fig. 7: eine Pedalkennlinie mit Kickdown Funktionalität,

- Fig. 8: ein Pedalsystem mit Antriebseinheit zur Beeinflussung der Pedalkennlinie.

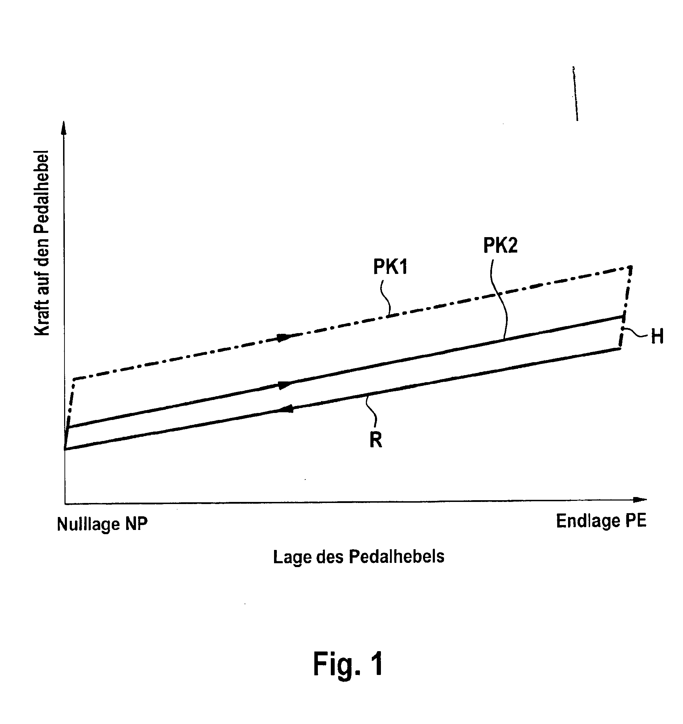

Um die Geschwindigkeit eines Fahrzeugs zu erhöhen, übt der Fahrzeugführer eine Kraft auf einen Pedalhebel 1 aus. Mit zunehmendem Winkel, um den der Pedalhebel 1 von der Nulllage und zur Endlage des Pedalhebels ausgelenkt wird, erhöht sich die Geschwindigkeit des Fahrzeugs. Um dem Fahrzeugführer das Gefühl zu vermitteln, dass er die Geschwindigkeit steuert, wird am Pedalhebel 1 eine Gegenkraft gegen den Fuß des Fahrzeugführers mit steigendem Pedalhebelwinkel erhöht. Diese Gegenkraft wird insbesondere durch eine Pedalrückholfeder 2, eine Motorrückholfeder 8 und ein Hystereseelement 5 erzeugt. In der Regel werden diese Vorrichtungen durch mechanische Federn realisiert. Diese können insbesondere Zugfedern und/oder Torsionsfedern sein. Sind die Kraft, die durch den Fahrzeugführer auf den Pedalhebel 1 ausgeübt wird, und die Gegenkraft, die durch die Rückholfeder 2, die Motorrückholfeder 8 und das Hystereseelement 5 erzeugt wird, im Gleichgewicht, so wird dem Fahrzeugführer insbesondere auf ebener Fahrbahn das Gefühl vermittelt, er bewegt sich mit gleichbleibender Geschwindigkeit vorwärts. Die Kennlinie eines Pedalhebels 1 zeigt den Verlauf der Kraft, die auf den Pedalhebel wirkt, in Abhängigkeit vom Pedalwinkel, In Fig. 1 repräsentiert die hinlaufende, strichpunktierte Linie der Kennlinie PK1 zwischen der Nulllage und der Endlage des Pedalhebels eine Geschwindigkeitserhöhung. Die anfängliche Gegenkraft bei der Nulllage und die Steigung der Pedalkennlinie PK1 sind durch die Auswahl der Pedalrückholfeder 2, der Motorrückholfeder 8 und des Hystereseelements 5 durch deren Materialkonstanten bestimmt und diese sollten während des gesamten Fahrzeuglebens weitestgehend konstant bleiben.

Will der Fahrzeugführer die Geschwindigkeit des Fahrzeug verringern, reduziert er die Kraft auf das Pedalhebel 1. Die Gegenkraft, mit der der Pedalhebel 1 auf den Fuß des Fahrzeugführer wirkt, wird nun um den Betrag, der durch das Hystereseelement 5 erzeugt wird, reduziert. Diese Verringerung der Gegenkraft bei Pedalwinkelumkehr wird durch die sog. Hystereselinie H veranschaulicht. Die Gegenkraft der rücklaufende Kennlinie R wird nunmehr nur noch durch die Pedalrückholfeder 2 und die Motorrückholfeder 8 aufgebracht. Der Fahrzeugführer verringert bei dem Wunsch, die Geschwindigkeit zu reduzieren, die Kraft auf den Pedalhebel 1. Die durch die Rückholfedern 2, 8 ausgeübte Gegenkraft bewirkt, dass der Pedalhebel 1 im Kontakt mit dem Fuß des Fahrzeugführer bleibt und dem Fahrzeugführer das Gefühl vermittelt wird, dass er das Fahrzeug aktiv in Richtung geringerer Geschwindigkeit steuert. Der Regelkreis Fahrer und Pedalhebel als Geschwindigkeitsregelgröße und Informationsübermittlungsinstrument bleibt geschlossen.

Die Pedalkennlinie in Fig. 1, die im wesentlichen durch die hinlaufende, strichpunktierte Linie, durch Hystereselinie H und durch die rücklaufende Linie R dargestellt wird, ist die passive Pedalkennlinie PK1. Die sogenannte minimale Pedalkennlinie PK2 zeigt die minimale Gegenkraft und die minimale Steigung einer Kennlinie. Diese minimale Pedalkennlinie PK2 darf aus Sicherheitsgründen nicht unterschritten werden. Sie stellt sicher, dass die Zeit, in der der Pedalhebel 1 von seiner möglichen Endlage PE bis zum Pedalwinkel 0 in seine Nulllage NP bewegt wird, einen bestimmten Wert nicht überschreitet (sofern der Fahrerfuß abgehoben ist).

Das Absenken der passiven Pedalkennlinie PK1 auf die minimale Pedalkennlinie PK2 wird insbesondere durch Neutralisieren oder Entkoppeln der Motorrückholfeder 8 in Richtung der Endlage ME des Elektromotors 4 durch eine entsprechende Bestromung des Elektromotors 4 realisiert. Dabei wird dann die minimale Pedalkennlinie PK2 lediglich durch die Pedalrückholfeder 2 und das Hystereseelement 5 erzeugt; weder die Motorrückholfeder 8 noch der Elektromotor 4 selbst üben in diesem Fall eine Kraft auf den Pedalhebel 1 aus.

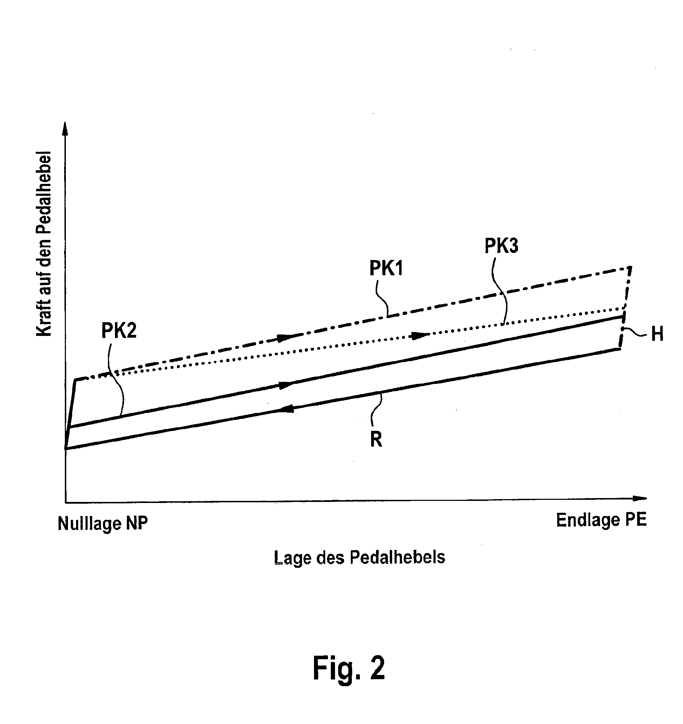

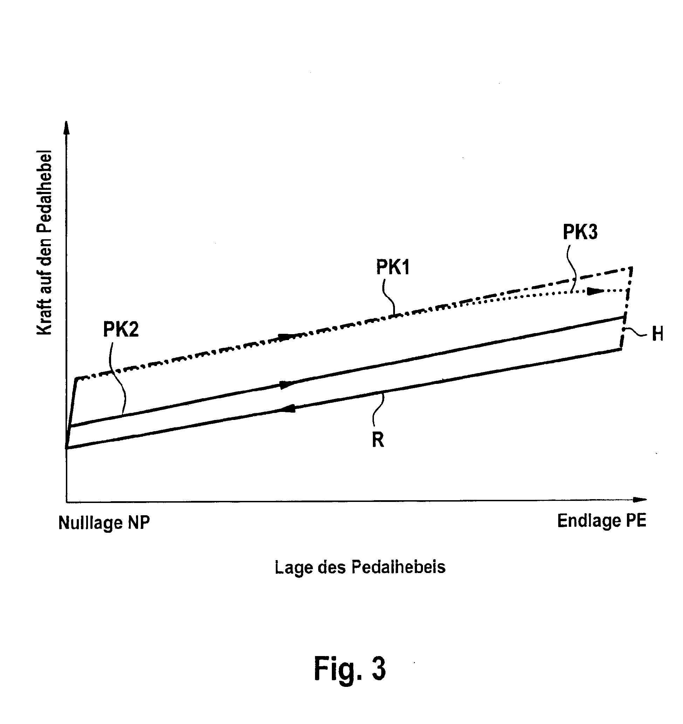

Insbesondere kann zwischen der Nulllage und der Endlage des Pedalhebels jeder Punkt zwischen der passiven Pedalkennlinie PK1 und der minimalen Pedalkennlinie PK2 durch eine entsprechende Bestromung des Elektromotors 4 im Bereich zwischen dem stromlosen Zustand und einer Bestromung, bei der sich der Elektromotor 4 in seiner Endlage befindet, realisiert werden kann. Fig. 2 zeigt eine Pedalkennlinie PK3 mit einer gegenüber der passiven Kennlinie PK1 abgesenkten hinlaufenden Linie mit konstanter aber geringerer Steigung. Im Unterschied dazu zeigt Fig. 3 eine Pedalkennlinie PK3 mit abgesenkter hinlaufender Linie mit variabler Steigung, wobei die Steigung zur Endlage PE des Pedalhebels 1 hin abnimmt.

Die passive Pedalkennlinie PK1 kann andererseits insbesondere auch bis zu einer maximalen Pedalkennlinie erhöht werden. Die maximale Pedalkennlinie ist durch das maximal erreichbare Moment des Elektromotors 4 festgelegt. Dabei wirkt dann durch eine entsprechende Bestromung des Elektromotors 4 in Richtung seiner Nulllage MN und damit in die Richtung der Nulllage PN des Pedalhebels 1 eine entsprechende maximale Rückstellkraft auf den Pedalhebel 1.

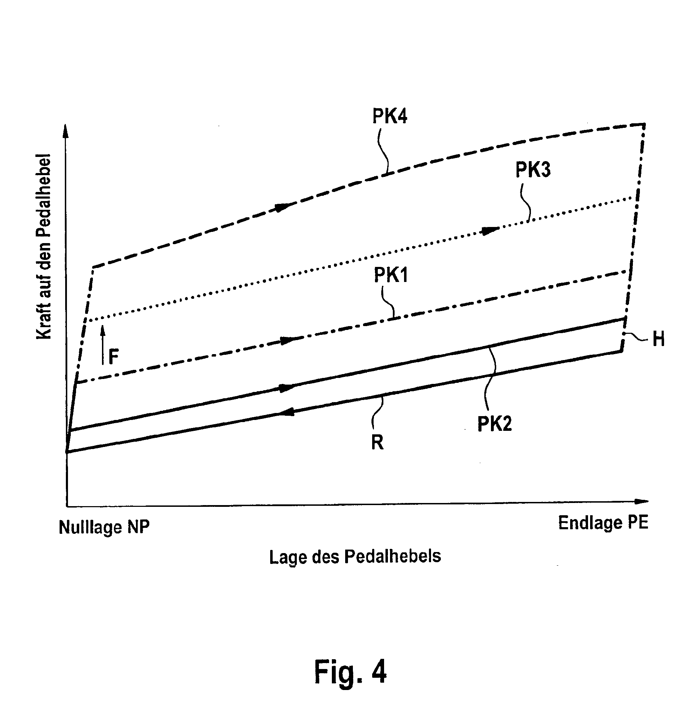

Wie im Falle der Absenkung der passiven Kennlinie bis zur minimalen Kennlinie kann hier vorteilhafter weise auch jeder Punkt zwischen der passiven Kennlinie und der maximalen Pedalkennlinie durch eine entsprechende Bestromung des Elektromotors im Bereich zwischen dem stromlosen Zustand und dem maximal möglichen Strom realisiert werden. Fig. 4 zeigt beispielsweise eine Pedalkennline PK3, die im gesamten Bereich zwischen der Nulllage PN und der Endlage PE des Pedalhebels 1 unter Beibehaltung der Steigung gegenüber der passiven Kennlinie PK1 erhöht ist. Dazu wird der Elektromotor 4 derart bestromt, dass der Gegenkraft, die durch die Pedalholrückholfeder 2, die Motorrückholfeder 8 und das Hystereseelement 5 auf den Pedalhebel 1 wirkt, eine konstante Rückstellkraft F aufaddiert wird. Die Steigung der ebenfalls in Fig. 4 gezeigten Pedalkennlinie PK4 ist zwischen der Nulllage PN und der Endlage PE des Pedalhebels 1 variabel.

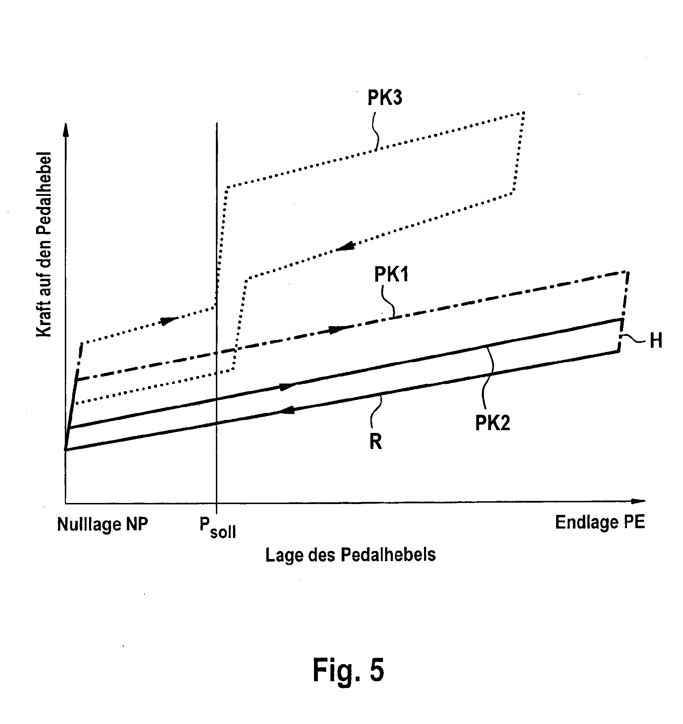

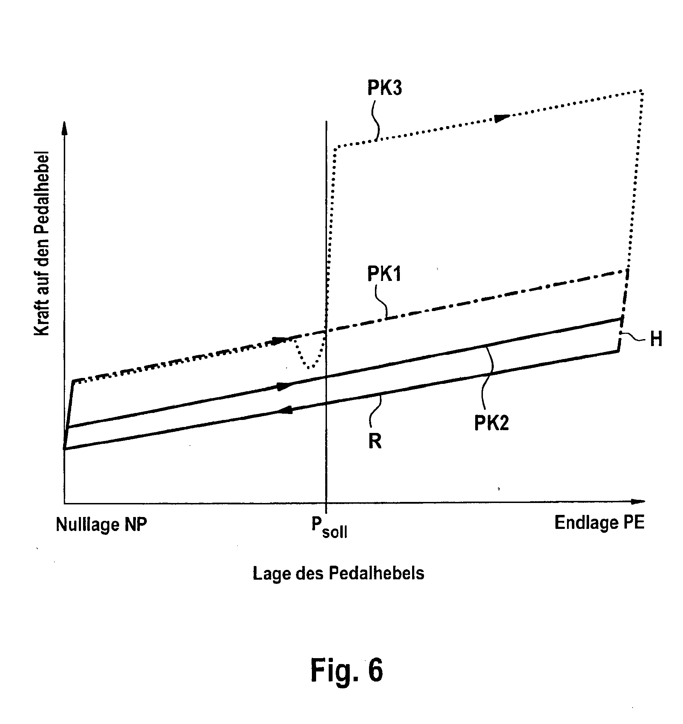

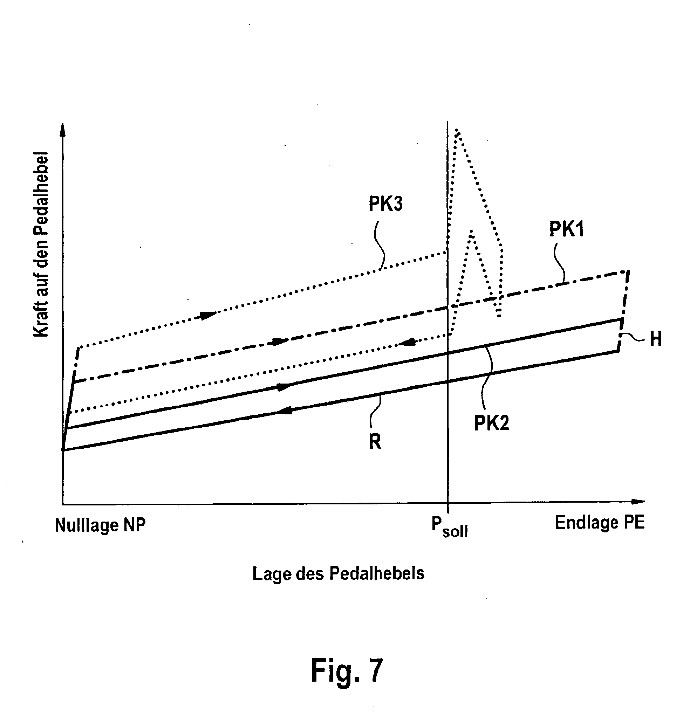

Fig. 5 zeigt eine Pedalkennlinie PK 3, bei der ab einem Pedalwinkel Pₛₒₗₗ eine Rückstellungskraft aufaddiert und oberhalb einer Solllage Pₛₒₗₗ des Pedalhebels 1 auch beibehalten wird. Dieser Fall kann beispielsweise eintreten, wenn der Fahrzeuglenker ein Ökofahrprogramm gewählt hat und die Motordrehzahl oberhalb einer Solllage Pₛₒₗₗ des Pedalhebels nicht mehr im umweltfreundlichen Bereich ist. Die Rückstellkraft wird erst dann reduziert, wenn die Motordrehzahl wieder dem Ökofahrprogramm entspricht. In Fig. 6 wird vor der Anhebung der Rückstellkraft bei der Solllage P ₛₒₗₗ des Pedalhebels 1 die Kraft gegen den Fuß des Fahrzeuglenkers kurzzeitig abgesenkt, um den Eindruck der anschließenden Krafterhöhung noch zu verstärken.
Ferner kann, wie in Fig. 7 gezeigt, bei einer Solllage P ₛₒₗₗ des Pedalhebels 1 insbesondere in der Nähe der Endlage PE des Pedalhebels 1 die durch die Steuereinheit 10 vorgegebene Rückstellkraft auf den Pedalhebel 1 durch eine entsprechende Bestromung des Elektromotors 4 derart gesteuert werden, dass eine Kickdown Funktionalität realisiert wird. Dabei wird beim schnellen Durchtreten des Pedalhebels 1 ein Kraftsprung, also ein abrupter Anstieg der Rückstellkraft, ausgelöst, der nach Überwindung der Rückstellkraft und zunehmendem Pedalwinkel schnell wieder abgebaut wird.

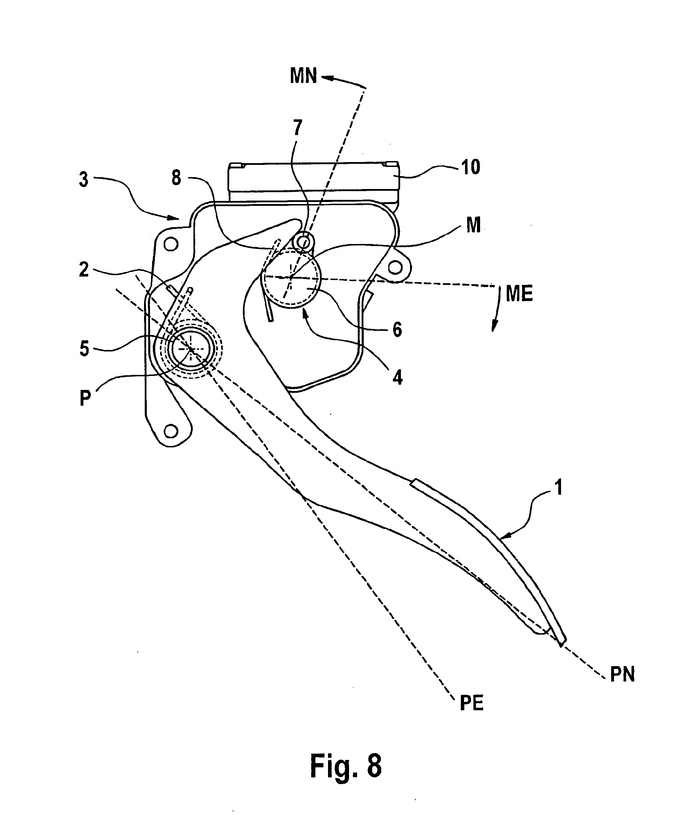

Fig. 8 zeigt ein kompaktes Pedalsystem zur Geschwindigkeitsregulierung, wobei eine Kraftrückstellungseinrichtung im Gehäuse 3 integriert ist. Das Pedalsystem umfasst im Wesentlichen einen Pedalhebel 1 zur Umsetzung des Fahrerwunsches in Geschwindigkeit. Ein Elektromotor 4, insbesondere ein Torque-Motor als weitere Komponente des Pedalsystems kann im bestromten Zustand eine Rückstellkraft auf den Pedalhebel 1 in Richtung einer Geschwindigkeitsverminderung bewirken. Am Elektromotor 4 ist eine Antriebsscheibe 6 auf dessen Welle angebracht, die mittels einer Antriebsrolle 7 die Rückstellkraft F auf den Pedalhebel 1 ausüben kann. Eine Steuereinheit 10 zur Steuerung des Elektromotors 4 ist ebenfalls im Gehäuse 3 integriert.

Der Elektromotor 4 umfasst in nicht gezeigter Weise im wesentlichen einen Stator und einen mit einer im Stator drehbaren Welle verbundenen Rotor. Der Stator ist auf der Welle zwischen dem Rotor und der Antriebsscheibe 6 angeordnet. Die Antriebsrolle 7 , die bei Bestromung des Elektromotors 4 die Rückstellkraft F auf den Pedalhebel 1 ausübt, ist hier an der Antriebsscheibe 6 angeordnet, zum Beispiel verschraubt oder verpresst. Der Einfluss des Biegemoments auf den Luftspalt zwischen dem Rotor und dem Stator, das bei Ausübung der Rückstellungskraft auf die Welle des Elektromotors 4 wirkt, ist in diesem Fall in der Regel sehr gering.. Die Funktionsfähigkeit des Elektromotors 4 ist demnach bei dieser Anordnung auch bei höheren Rückstellungskräften gewährleistet.
Fig. 8 zeigt ein Pedalsystem mit einem Pedalhebel 1 in seiner Nulllage PN. Das heißt, der Fuß des Fahrzeuglenkers auf den Pedalhebel 1 übt keine Kraft in Richtung Geschwindigkeitserhöhung aus und der Motor des Fahrzeugs dreht mit der Leerlaufdrehzahl. Der Pedalhebel 1 ist um den Drehpunkt P schwenkbar, und zwar von einer Nulllage PN bis zur Endlage PE, was in Motordrehzahl übersetzt heißt, von Leerlauf bis Vollgas. In diesem Fall ist im Drehpunkt P des Pedalhebels 1 eine Schenkelfeder als Pedalrückholfeder 2 derart angeordnet, dass sie den Pedalhebel 1 in seine Nulllage PN drückt. Alternativ wäre auch eine linear wirkende Feder als Pedalhebelrückholfeder 2 insbesondere außerhalb des Drehpunkts P denkbar. Der Elektromotor 4 ist um seinen Drehpunkt M schwenkbar, und zwar von seiner Endlage ME bis zu seiner Nulllage MN. Im beschriebenen Fall sind die Drehpunkte P und M des Pedalhebels 1 und des Elektromotors 4 örtlich getrennt. Es wäre aber durchaus ein Pedalsystem möglich, bei dem die beiden Drehpunkte P und M zusammenfallen.

Durch Entkoppeln der Motorrückholfeder 8 in Richtung der Endlage ME des Elektromotors 4 kann die passive Pedalkennlinie PK1 durch eine entsprechende Bestromung des Elektromotors 4 auf eine minimale Pedalkennlinie PK2 abgesenkt werden, wobei dann die minimale Pedalkennlinie PK2 durch die Pedalrückholfeder 2 und das Hystereseelement 5 erzeugt wird.

### Bezugszeichenliste:

- **1**: Pedalhebel
- **2**: Pedalrückholfeder
- **3**: Gehäuse
- **4**: Elektromotor
- **5**: Hystereseelement
- **6**: Antriebsscheibe
- **7**: Antriebsrolle
- **8**: Motorrückholfeder
- **9**: Schnittstelle
- **10**: Steuereinheit
- **11**: Rotor
- **12**: Stator
- **13**: Welle des Elektromotors
- **14**: Überwachungselement
- **15**: Zapfen
- **F**: Rückstellkraft
- **M**: Drehpunkt des Elektromotors
- **MN**: Nulllage des Elektromotors
- **ME**: Endlage des Elektromotors
- **P**: Drehpunkt des Pedalhebels
- **PN**: Nulllage des Pedalhebels
- **PE**: Endlage des Pedalhebels
- **PK1**: passive Pedalkennlinie
- **PK2**: minimale Pedalkennlinie
- **PK**: Pedalkennlinie
- **Pₛₒₗₗ**: Solllage des Pedalhebels
- **R**: Rücklaufende Kennlinie
- **H**: Hysteresekennlinie

## Patentansprüche

1. Verfahren zur Geschwindigkeitsregulierung in einem Kraftfahrzeug mittels eines Pedalsystems mit einer in einem Gehäuse (3) integrierten Kraftrückstellungseinrichtung umfassend
- einen Pedalhebel (1) zur Umsetzung des Fahrerwunsches in Geschwindigkeit, wobei der Pedalhebel (1) um einen Drehpunkt (P) von einer Nulllage PN des Pedalhebels (1) bis zu einer Endlage PE des Pedalhebels (1) schwenkbar ist,
- eine Pedalrückholfeder (2), die den Pedalhebel (1) in seine Nulllage (PN) bringen kann,
- einen Elektromotor (4), der um einen Drehpunkt (M) von einer Nulllage (MN) des Elektromotors (4) bis zu einer Endlage (ME) des Elektromotors (4) schwenkbar ist, und der im bestromten Zustand eine Rückstellkraft F auf den Pedalhebel (1) in Richtung von dessen Nulllage (PN) ausüben kann, wobei der jeweilige Drehsinn von Endlage (PE, ME) in Nulllage (PN, MN) für den Pedalhebel (1) und den Elektromotor (4) identisch ist,
- eine Antriebsscheibe (6), die mittels einer Welle (13) mit dem Elektromotor (4) verbunden ist und die mittels einer an der Antriebsscheibe (6) exzentrisch angeordneten Antriebsrolle (7) die Rückstellkraft F auf den Pedalhebel (1) ausübt, wobei die Antriebsrolle (7) bei der Ausübung der Rückstellkraft (F) auf den Pedalhebel (1) am Pedalhebel (1) lediglich anliegt,
- eine Motorrückholfeder (8) zur Rückstellung des Elektromotors (4) in Richtung der Nulllage (MN) des Elektromotors (4),
- eine Steuereinheit (10) zur Steuerung des Elektromotors (4), wobei der funktionale Zusammenhang zwischen einer Kraft, die auf den Pedalhebel wirkt, und dem Winkel des Pedalhebels (1) zwischen der Nulllage (PN) und der Endlage PE durch eine Pedalkennlinie (PK1, PK2, PK3, ...) beschrieben wird,
**dadurch gekennzeichnet, dass** bei stromlosem Elektromotor (4) die Pedalrückholfeder (2), ein Hystereseelement (5) am Pedalhebel (1) und die Motorrückholfeder (8) eine passive Pedalkennlinie (PK1) erzeugen und die passive Kennlinie (PK1) durch Bestromung des Elektromotors (4) veränderbar ist, wobei die passive Pedalkennlinie (PK1) zwischen der Nulllage (PN) und der Endlage (PE) des Pedalhebels (1) durch Entkoppeln der Motorrückholfeder (8) in Richtung der Endlage (ME) des Elektromotors (4) durch eine entsprechende Bestromung des Elektromotors (4) auf eine minimale Pedalkennlinie (PK2) absenkbar ist, wobei dann die minimale Pedalkennlinie (PK2) durch die Pedalrückholfeder (2) und das Hystereseelement (5) erzeugt wird.

2. Verfahren zur Geschwindigkeitsregulierung nach Anspruch 1, **dadurch gekennzeichnet, dass** zwischen der Nulllage (PN) und der Endlage (PE) des Pedalhebels (1) jeder Punkt zwischen der passiven Kennlinie (PK1) und der minimalen Pedalkennlinie (PK2) durch eine entsprechende Bestromung des Elektromotors (4) im Bereich zwischen dem stromlosen Zustand und einer Bestromung, bei der sich der Elektromotor (4) in seiner Endlage (ME) befindet, realisiert werden kann.

3. Verfahren zur Geschwindigkeitsregulierung nach Anspruch 1, **dadurch gekennzeichnet, dass** zwischen der Nulllage (PN) und der Endlage (PE) des Pedalhebels (1) die passive Pedalkennlinie (PK1) bis zu einer maximalen Pedalkennlinie, die durch das maximale Moment des Elektromotors (4) festgelegt ist, erhöhbar ist, indem durch eine entsprechende Bestromung des Elektromotors (4) in Richtung seiner Nullage (MN) eine entsprechende Rückstellkraft (F) auf den Pedalhebel (1) wirkt.

4. Verfahren zur Geschwindigkeitsregulierung nach Anspruch 3, **dadurch gekennzeichnet, dass** zwischen der Nulllage (PN) und der Endlage (PE) des Pedalhebels (1) jeder Punkt zwischen der passiven Kennlinie (PK1) und der maximalen Pedalkennlinie durch eine entsprechende Bestromung des Elektromotors (4) im Bereich zwischen dem stromlosen Zustand und dem maximal möglichen Strom realisiert werden kann.

5. Verfahren zur Geschwindigkeitsregulierung nach einem der vorangehenden Ansprüche, **dadurch gekennzeichnet, dass** bei einer Solllage (Pₛₒₗₗ) zwischen der Nulllage PN und der Endlage PE des Pedalhebels (1) ein durch die Steuereinheit (10) vorgegebener Kraftsprung auf den Pedalhebel (1) in Richtung seiner Nullage (PN) ausgeübt wird, der den Fahrzeugführer auf eine Abweichung vom normalen Betriebszustand des Kraftfahrzeugs aufmerksam machen soll.

6. Verfahren zur Geschwindigkeitsregulierung nach Anspruch 5, **dadurch gekennzeichnet, dass** vor der Solllage (P ₛₒₗₗ) eine zeitlich begrenzte Absenkung der Pedalkennlinie (PK) durchgeführt wird.

7. Verfahren zur Geschwindigkeitsregulierung nach einem der vorangehenden Ansprüche, **dadurch gekennzeichnet, dass** bei einer Solllage (P ₛₒₗₗ) des Pedalhebels (1) zwischen der Nulllage (PN) und der Endlage (PE) des Pedalhebels (1) die durch die Steuereinheit (11) vorgegebene Rückstellkraft F auf den Pedalhebel (1) derart beaufschlagbar ist, dass eine Kickdown Funktionalität realisiert wird.

8. Pedalsystem zur Durchführung des Verfahrens nach Anspruch 1, mit einer in einem Gehäuse (3) integrierten Kraftrückstellungseinrichtung umfassend
- einen Pedalhebel (1) zur Umsetzung des Fahrerwunsches in Geschwindigkeit, wobei der Pedalhebel (1) um einen Drehpunkt (P) von einer Nulllage (PN) des Pedalhebels (1) bis zu einer Endlage (PE) des Pedalhebels (1) schwenkbar ist,
- eine Pedalrückholfeder (2), die den Pedalhebel (1) in seine Nulllage (PN) bringen kann,
- einen Elektromotor (4), der um einen Drehpunkt (M) von einer Nulllage (MN) des Elektromotors (4) bis zu einer Endlage (ME) des Elektromotors (4) schwenkbar ist, und der im bestromten Zustand eine Rückstellkraft auf den Pedalhebel (1) in Richtung von dessen Nulllage (PN) ausüben kann, wobei der jeweilige Drehsinn von Endlage (PE, ME) in Nulllage (PN, MN) für den Pedalhebel (1) und den Elektromotor (4) identisch ist,
- eine Antriebsscheibe (6), die mittels einer Welle mit dem Elektromotor (4) verbunden ist und die mittels einer an der Antriebsscheibe (6) exzentrisch angeordneten Antriebsrolle (7) die Rückstellkraft auf den Pedalhebel (1) ausübt, wobei die Antriebsrolle (7) bei der Ausübung der Rückstellkraft (F) auf den Pedalhebel (1) am Pedalhebel (1) lediglich anliegt,
- eine Motorrückholfeder (8) zur Rückstellung des Elektromotors (4) in Richtung der Nulllage (MN) des Elektromotors (4),
- eine Steuereinheit (10) zur Steuerung des Elektromotors (4),
**dadurch gekennzeichnet, dass**
der Elektromotor (4) einen Rotor und einen Stator umfasst, wobei der Stator auf der Welle des Elektromotors (4) zwischen dem Rotor und der Antriebsscheibe (6) angeordnet ist, wobei bei stromlosem Elektromotor (4) die Pedalrückholfeder (2), ein Hystereseelement (5) am Pedalhebel (1) und die Motorrückholfeder (8) eine passive Pedalkennlinie (PK1) erzeugen und die passive Kennlinie (PK1) durch Bestromung des Elektromotors (4) veränderbar ist.

## Claims

1. A method for regulating the speed in a motor vehicle by a pedal system having a force resetting device which is integrated in a housing (3), comprising:
- a pedal lever (1) for converting the driver's request to speed, wherein the pedal lever (1) can be pivoted about a center of rotation (P) from a zero position PN of the pedal lever (1) to an end position PE of the pedal lever (1),
- a pedal return spring (2) which can move the pedal lever (1) to its zero position (PN),
- an electric motor (4) which can be pivoted about a center of rotation (M) from a zero position (MN) of the electric motor (4) to an end position (ME) of the electric motor (4), and which in the energized state can apply a resetting force F to the pedal lever (1) in the direction of the zero position (PN) thereof, wherein the respective rotational direction from the end position (PE, ME) to the zero position (PN, MN) is identical for the pedal lever (1) and the electric motor (4),
- a drive pulley (6) which is connected to the electric motor (4) by a shaft (13) and which applies the resetting force F to the pedal lever (1) by a drive roller (7) which is arranged eccentrically on the drive pulley (6), wherein, when the resetting force (F) is applied to the pedal lever (1), the drive roller (7) merely bears on the pedal lever (1),
- a motor return spring (8) for resetting the electric motor (4) in the direction of the zero position (MN) of the electric motor (4),
- a control unit (10) for controlling the electric motor (4), wherein
the functional relationship between a force which acts on the pedal lever and the angle of the pedal lever (1) between the zero position (PN) and the end position PE is described by a pedal characteristic curve (PK1, PK2, PK3, ...),
**characterized in that** when the electric motor (4) is de-energized the pedal return spring (2), a hysteresis element (5) on the pedal lever (1) and the motor return spring (8) generate a passive pedal characteristic curve (PK1), and the passive characteristic curve (PK1) can be changed by energizing the electric motor (4), wherein the passive pedal characteristic curve (PK1) between the zero position (PN) and the end position (PE) of the pedal lever (1) can be reduced to a minimum pedal characteristic curve (PK2) by decoupling the motor return spring (8) in the direction of the end position (ME) of the electric motor (4) by correspondingly energizing the electric motor (4), wherein the minimum pedal characteristic curve (PK2) is then generated by the pedal return spring (2) and the hysteresis element (5).

2. The method for regulating the speed according to Claim 1, **characterized in that** between the zero position (PN) and the end position (PE) of the pedal lever (1) any point between the passive characteristic curve (PK1) and the minimum pedal characteristic curve (PK2) can be implemented by correspondingly energizing the electric motor (4) in the region between the de-energized state and energization during which the electric motor (4) is in its end position (ME).

3. The method for regulating the speed according to Claim 1, **characterized in that** between the zero position (PN) and the end position (PE) of the pedal lever (1) the passive pedal characteristic curve (PK1) can be increased up to a maximum pedal characteristic curve which is defined by the maximum torque of the electric motor (4), by virtue of the fact that a corresponding resetting force (F) acts on the pedal lever (1) through corresponding energization of the electric motor (4) in the direction of its zero position (MN).

4. The method for regulating the speed according to Claim 3, **characterized in that** between the zero position (PN) and the end position (PE) of the pedal lever (1) any point between the passive characteristic curve (PK1) and the maximum pedal characteristic curve can be implemented by correspondingly energizing the electric motor (4) in the region between the de-energized state and the maximum possible current.

5. The method for regulating the speed according to any one of the preceding claims, **characterized in that** in the case of a setpoint position (Pₛₒₗₗ) between the zero position (PN) and the end position PE of the pedal lever (1) a jump in force which is predefined by the control unit (10) is applied to the pedal lever (1) in the direction of its zero position (PN), which jump in force is intended to alert the driver of the vehicle to a deviation from the normal operating state of the motor vehicle.

6. The method for regulating the speed according to Claim 5, **characterized in that** before the setpoint position (Pₛₒₗₗ) a chronologically limited reduction in the pedal characteristic curve (PK) is carried out.

7. The method for regulating the speed according to any one of the preceding claims, **characterized in that** in the case of a setpoint position (Pₛₒₗₗ) of the pedal lever (1) between the zero position (PN) and the end position (PE) of the pedal lever (1) the resetting force (F) which is predefined by the control unit (11) can be applied to the pedal lever (1) in such a way that a kickdown functionality is implemented.

8. A pedal system for carrying out the method according to Claim 1, having a force resetting device which is integrated in a housing (3), comprising:
- a pedal lever (1) for converting the driver's request to speed, wherein the pedal lever (1) can be pivoted about a center of rotation (P) from a zero position (PN) of the pedal lever (1) to an end position (PE) of the pedal lever (1),
- a pedal return spring (2) which can move the pedal lever (1) to its zero position (PN),
- an electric motor (4) which can be pivoted about a center of rotation (M) from a zero position (MN) of the electric motor (4) to an end position (ME) of the electric motor (4), and which, in the energized state, can apply a resetting force to the pedal lever (1) in the direction of the zero position (PN) thereof, wherein the respective rotational direction from the end position (PE, ME) to the zero position (PN, MN) is identical for the pedal lever (1) and the electric motor (4),
- a drive pulley (6), which is connected to the electric motor (4) by a shaft and which applies the resetting force to the pedal lever (1) by a drive roller (7) which is arranged eccentrically on the drive pulley (6), wherein, when the resetting force (F) is applied to the pedal lever (1), the drive roller (7) merely bears on the pedal lever (1),
- a motor return spring (8) for resetting the electric motor (4) in the direction of the zero position (MN) of the electric motor (4),
- a control unit (10) for controlling the electric motor (4),
**characterized in that**
the electric motor (4) comprises a rotor and a stator, wherein the stator is arranged on the shaft of the electric motor (4) between the rotor and the drive pulley (6), wherein, when the electric motor (4) is de-energized, the pedal return spring (2), a hysteresis element (5) on the pedal lever (1) and the motor return spring (8) generate a passive pedal characteristic curve (PK1), and the passive characteristic curve (PK1) can be changed by energizing the electric motor (4).

## Revendications

1. Procédé de régulation de vitesse dans un véhicule automobile au moyen d'un système de pédale avec un dispositif de rappel de force intégré dans un boîtier (3), comprenant
- un levier de pédale (1) destiné à convertir en vitesse le souhait du conducteur, le levier de pédale (1) pouvant pivoter autour d'un point de rotation (P) à partir d'une position nulle PN du levier de pédale (1) jusqu'à une position extrême PE du levier de pédale (1),
- un ressort de rappel de pédale (2), qui peut amener le levier de pédale (1) dans sa position nulle (PN),
- un moteur électrique (4), qui peut pivoter autour d'un point de rotation (M) à partir d'une position nulle (MN) du moteur électrique (4) jusqu'à une position extrême (ME) du moteur électrique (4), et qui, quand il est alimenté en courant, peut exercer une force de rappel F sur le levier de pédale (1) en direction de la position nulle (PN) de ce dernier, le sens de rotation respectif à partir de la position extrême (PE, ME) vers la position nulle (PN, MN) étant identique pour le levier de pédale (1) et pour le moteur électrique (4),
- une poulie d'entraînement (6), qui est raccordée au moteur électrique (4) au moyen d'un arbre (13) et qui, au moyen d'un rouleau d'entraînement (7) disposé de façon excentrée sur la poulie d'entraînement (6), exerce la force de rappel F sur le levier de pédale (1), le rouleau d'entraînement (7) étant simplement adjacent au levier de pédale (1) lors de l'exercice de la force de rappel F sur le levier de pédale (1),
- un ressort de rappel de moteur (8) destiné au rappel du moteur électrique (4) en direction de la position nulle (MN) du moteur électrique (4),
- une unité de commande (10) destinée à la commande du moteur électrique (4),
la relation fonctionnelle entre une force qui agit sur le levier de pédale et l'angle du levier de pédale (1) entre la position nulle (PN) et la position extrême PE étant décrite par une courbe caractéristique de pédale (PK1, PK2, PK3, ...),
**caractérisé en ce que**, quand le moteur électrique (4) n'est pas alimenté en courant, le ressort de rappel de pédale (2), un système d'hystérésis (5) sur le levier de pédale (1), et le ressort de rappel de moteur (8) produisent une courbe caractéristique de pédale passive (PK1), et la courbe caractéristique de pédale passive (PK1) peut être modifiée par alimentation en courant du moteur électrique (4), la courbe caractéristique de pédale passive (PK1) entre la position nulle (PN) et la position extrême (PE) du levier de pédale (1) pouvant être abaissée à une courbe caractéristique de pédale minimale (PK2) par le découplage du ressort de rappel de moteur (8) en direction de la position extrême (ME) du moteur électrique (4) par une alimentation en courant correspondante du moteur électrique (4), la courbe caractéristique de pédale minimale (PK2) étant produite par le ressort de rappel de pédale (2) et le système d'hystérésis (5).

2. Procédé de régulation de vitesse selon la revendication 1, **caractérisé en ce que**, entre la position nulle (PN) et la position extrême (PE) du levier de pédale (1), chaque point entre la courbe caractéristique passive (PK1) et la courbe caractéristique de pédale minimale (PK2) peut être réalisé par une alimentation en courant correspondante du moteur électrique (4) dans la plage entre l'état non alimenté en courant et une alimentation en courant pour laquelle le moteur électrique (4) se trouve dans sa position extrême (ME).

3. Procédé de régulation de vitesse selon la revendication 1, **caractérisé en ce que**, entre la position nulle (PN) et la position extrême (PE) du levier de pédale (1), la courbe caractéristique de pédale passive (PK1) peut être relevée jusqu'à une courbe caractéristique de pédale maximale qui est spécifiée par le moment maximal du moteur électrique (4) par le fait qu'une force de rappel (F) correspondante agit sur le levier de pédale (1) en direction de sa position nulle (MN) par une alimentation en courant correspondante du moteur électrique (4).

4. Procédé de régulation de vitesse selon la revendication 3, **caractérisé en ce que**, entre la position nulle (PN) et la position extrême (PE) du levier de pédale (1), chaque point entre la courbe caractéristique passive (PK1) et la courbe caractéristique de pédale maximale peut être réalisé par une alimentation en courant correspondante du moteur électrique (4) dans la plage entre l'état non alimenté en courant et le courant possible maximal.

5. Procédé de régulation de vitesse selon l'une des revendications précédentes, **caractérisé en ce que**, pour une position de consigne (Pₛₒₗₗ) entre la position nulle PN et la position extrême PE du levier de pédale (1), un saut de force prédéfini par l'unité de commande (10) est exercé sur le levier de pédale (1) en direction de la position nulle (PN) de ce dernier et doit attirer l'attention du conducteur du véhicule sur un écart à l'état de fonctionnement normal du véhicule automobile.

6. Procédé de régulation de vitesse selon la revendication 5, **caractérisé en ce que**, un abaissement, limité dans le temps, de la courbe caractéristique de pédale (PK) est effectué avant la position de consigne (Pₛₒₗₗ).

7. Procédé de régulation de vitesse selon l'une des revendications précédentes, **caractérisé en ce que**, pour une position de consigne (Pₛₒₗₗ) du levier de pédale (1) entre la position nulle (PN) et la position extrême (PE) du levier de pédale (1), la force de rappel F prédéfinie par l'unité de commande (11) peut être appliquée sur le levier de pédale (1) de telle sorte qu'un kickdown de fonctionnalité est réalisé.

8. Système de pédale destiné à la réalisation du procédé selon la revendication 1, avec un dispositif de rappel de force intégré dans un boîtier (3), comprenant
- un levier de pédale (1) destiné à convertir en vitesse le souhait du conducteur, le levier de pédale (1) pouvant pivoter autour d'un point de rotation (P) à partir d'une position nulle (PN) du levier de pédale (1) jusqu'à une position extrême (PE) du levier de pédale (1),
- un ressort de rappel de pédale (2), qui peut amener le levier de pédale (1) dans sa position nulle (PN),
- un moteur électrique (4), qui peut pivoter autour d'un point de rotation (M) à partir d'une position nulle (MN) du moteur électrique (4) jusqu'à une position extrême (ME) du moteur électrique (4), et qui, quand il est alimenté en courant, peut exercer une force de rappel sur le levier de pédale (1) en direction de la position nulle (PN) de ce dernier, le sens de rotation respectif à partir de la position extrême (PE, ME) vers la position nulle (PN, MN) étant identique pour le levier de pédale (1) et pour le moteur électrique (4),
- une poulie d'entraînement (6), qui est raccordée au moteur électrique (4) au moyen d'un arbre (13) et qui, au moyen d'un rouleau d'entraînement (7) disposé de façon excentrée sur la poulie d'entraînement (6), exerce la force de rappel sur le levier de pédale (1), le rouleau d'entraînement (7) étant simplement adjacent au levier de pédale (1) lors de l'exercice de la force de rappel (F) sur le levier de pédale (1),
- un ressort de rappel de moteur (8) destiné au rappel du moteur électrique (4) en direction de la position nulle (MN) du moteur électrique (4),
- une unité de commande (10) destinée à la commande du moteur électrique (4),
**caractérisé en ce que**
le moteur électrique (4) comprend un rotor et un stator, le stator étant disposé sur l'arbre du moteur électrique (4) entre le rotor et l'arbre d'entraînement (6), le ressort de rappel de pédale (2), un système d'hystérésis (5) sur le levier de pédale (1), et le ressort de rappel de moteur (8) produisant une courbe caractéristique de pédale passive (PK1) quand le moteur électrique (4) n'est pas alimenté en courant, et la courbe caractéristique de pédale passive (PK1) pouvant être modifiée par alimentation en courant du moteur électrique (4).
